# EUROPEAN PATENT SPECIFICATION

(11) **EP 3 750 810 B1**
(45) Date of publication and mention of the grant of the patent: **20.11.2024**
(21) Application number: 19215627.1
(22) Date of filing: 12.12.2019
(51) Int. Cl.: B64D 15/00, B64D 15/12, B64D 33/00, B64D 33/02

(54) **FRICTION ENERGY SAVERS**
REIBUNGSENERGIEEINSPARER
ÉCONOMISEURS D'ÉNERGIE DE FRICTION

(30) Priority: 14.06.2019 US 201916441876
(43) Date of publication of application: 16.12.2020
(73) Proprietor: ROSEMOUNT AEROSPACE INC., Burnsville, MN 55306-4898 (US)
(72) Inventor: LOPRESTO, Vincent R., Eagan, MN 55123 (US); MATHEIS, Brian Daniel, Lakeville, MN 55044 (US)
(74) Representative: Dehns

(56) References cited:
- EP-A1- 2 621 010
- EP-A1- 2 636 601
- WO-A2-2008/137147
- CN-A- 109 823 510
- GB-A- 2 070 739
- GB-A- 523 803
- US-A- 5 687 932
- US-A1- 2015 035 548
- US-A1- 2017 126 150

## Description

### BACKGROUND

### 1. Field

This disclosure relates to energy conversion systems, e.g., for powering an aircraft system and/or deicing aircraft structures.

### 2. Description of Related Art

Ice protection systems used in typical subsonic aircraft fall primarily into one of five categories. The first category includes systems that use hot bleed air from the engine compressor section and blow it against the region that needs to be protected against ice accretion. The second category includes systems that use electrical heating mats to protect critical areas against ice accretion. The third category includes inflatable rubber "boots" mounted on the outside of the area of the aircraft to be protected such that when the boot is inflated, the ice is cracked off. The fourth category includes electro-mechanical systems that shock the surface of interest to "knock" the ice off. All of these types of systems need power from the aircraft engines in order to perform their function. The fifth category includes freezing point depression systems that apply a chemical/fluid to the leading edge to decrease the freezing point of water.

Such conventional methods and systems have generally been considered satisfactory for their intended purpose. However, there is a need in the art for improved deicing systems, e.g., that can reduce weight and/or power draw for use with high-speed vehicles. The present disclosure provides a solution for this need. US 5,687,932 A describes an apparatus for removing heat. US 2015/035548 A1 describes a device for detecting critical states of a surface. WO 2008/137147 A2 describes methods and compositions for inhibiting surface icing. EP 2 636 601 A1 describes a rotary wing aircraft propulsion system with electric power generation. US 2017/126150 describes a combined hybrid thermionic and thermoelectric generator. A1 CN 109 823510 A describes a hypersonic aircraft and thermal protection structure and coolant circulating system. GB 523 803 A describes a water cooling system for an aeroplane.

### SUMMARY

According to a first aspect, an aerodynamic friction energy deicing system is provided according to claim 1. The aircraft structure can include, for example, at least one of a leading edge of a wing, a leading edge of a tail, a fuselage, a control surface, an instrument probe, or a windscreen.

In accordance with at least one aspect of this disclosure, the system can be an aerodynamic friction energy generation system for providing electrical energy to an aircraft wherein the heat energy device can be configured to be operatively connected to an aircraft structure and to convert heat energy due to aerodynamic friction on the aircraft structure into electrical energy for use by an aircraft system. The aerodynamic friction energy generation system can include an electrical storage device operatively connected to the heat energy device to receive electrical energy therefrom.

According to a second aspect, a method is provided according to claim 5.

Storing the heat energy as heat can include storing the heat energy in an aircraft fluid. The aircraft fluid can include at least one of aircraft fuel, aircraft hydraulic fluid, aircraft coolant, aircraft refrigerant, or aircraft oil, or a dedicated energy storage fluid. The method can include using the stored heat or heat energy for preventing ice formation or deicing the aircraft structure.

In certain embodiments, storing the heat energy can include converting the heat energy into electrical energy and storing the electrical energy in an electrical storage device. The method can include using the stored electrical energy to power an aircraft system (e.g., avionics, pumps, etc.).

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of a system in accordance with this disclosure;
Fig. 2 is a schematic view of a system in accordance with this disclosure; and
Fig. 3 is a schematic view of a system in accordance with this disclosure.

### DETAILED DESCRIPTION

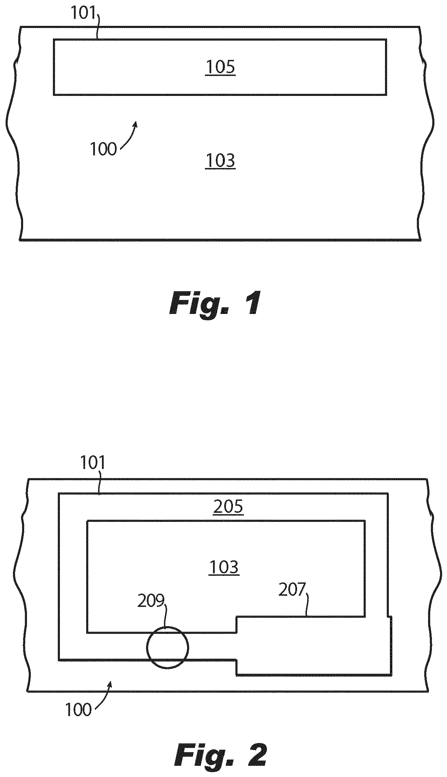

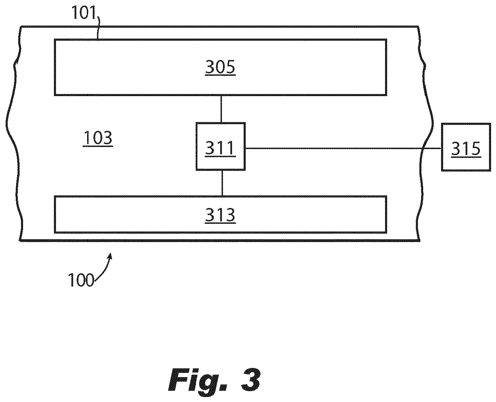

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2 and 3. Certain embodiments described herein can be used for, e.g., deicing and/or for energy production for any other use.

Referring to Figs. 1-3, an aerodynamic friction energy system 100 includes a heat energy device 101 configured to be operatively connected to an aircraft structure 103 and to convert heat energy due to friction on the aircraft structure 103 into another form (e.g., electrical energy) or to store heat energy (e.g., as heat or chemical energy) due to friction on the aircraft structure 103. The converted and/or stored energy can be used for any suitable purpose, e.g., for use in ice prevention and/or deicing and/or powering one or more aircraft systems. The system 100 includes the aircraft structure 103, for example.

The aircraft structure 103 can include at least one of a leading edge of a wing, a leading edge of a tail, a fuselage, a control surface, an instrument probe, or a windscreen. Any other suitable aircraft structure is contemplated herein.

As shown in Fig, 1, the heat energy device 101 includes a heat energy storage medium 105 configured to store the heat energy as heat for later use. The heat energy storage medium 105 includes a phase change material configured to receive heat due to friction and to change phase from a solid to a liquid as a result to store heat for later use, e.g., for ice prevention and/or deicing. As shown in Fig. 2, the heat energy storage medium 105 includes at least one fluid 205 circulating through the heat energy device 101 including at least one of aircraft fuel, aircraft hydraulic fluid, aircraft coolant, aircraft refrigerant, or aircraft oil, or a dedicated energy storage fluid (e.g., a fluid solely used for the heat energy device 101). The at least one fluid 205 can include a plurality of fluids in a fluidly separate circuit through the heat energy device 101, for example. The at least one fluid 205 can be from any suitable source, e.g., from a tank 207 circulated by pump 209, for example.

Referring to Fig. 3, the heat energy device 101 includes a thermoelectric generator 305 configured to convert heat due to friction into electrical energy. An electrical storage device 311 (e.g., a battery, a capacitor, etc.) is operatively connected to the thermoelectric generator 305 to receive electrical energy therefrom. The system 100 includes an electrical deicing system 313 attached to a structure 103 of an aircraft for receiving energy from the electrical storage device 311, e.g., to provide deicing heat to the aircraft structure.

The system 100 can be an aerodynamic friction energy generation system for providing electrical energy to an aircraft. The heat energy device 101 is configured to be operatively connected to an aircraft structure 103 and to convert heat energy due to aerodynamic friction on the aircraft structure 103 into electrical energy for use by an aircraft system, e.g., electrical deicing system 313 and avionics 315. The aerodynamic friction energy generation system 100 includes an electrical storage device 311 operatively connected to the heat energy device 101 to receive electrical energy therefrom.

In certain embodiments, the aircraft system can be an electrical deicing system 313. Any other suitable systems (e.g., aircraft avionics 315) are contemplated herein.

In accordance with at least one aspect of this disclosure, a method includes receiving heat energy caused by aerodynamic friction on an aircraft structure, and storing the heat energy for later use. Storing the heat energy includes storing the heat energy as heat. Storing the heat energy as heat includes storing the heat energy in a phase change material.

Storing the heat energy as heat can include storing the heat energy in an aircraft fluid or a fluid dedicated to this purpose. The aircraft fluid can include at least one of aircraft fuel, aircraft hydraulic fluid, aircraft coolant, aircraft refrigerant, or aircraft oil, or a dedicated energy storage fluid. The method includes using the stored heat or heat energy for preventing ice formation or deicing the aircraft structure.

In certain embodiments, storing the heat energy can include converting the heat energy into electrical energy and storing the electrical energy in an electrical storage device. The method can include using the stored electrical energy for preventing ice formation or deicing the aircraft structure. The method can include using the stored electrical energy to power an aircraft system (e.g., one or more of avionics, pumps, etc.).
Embodiments include using the heat generated by skin friction of a high speed aircraft (e.g., supersonic or hypersonic aircraft) to perform ice protection. Instead of actively powering an ice protection system, embodiments can store the heat generated by the kinetic energy of the speed of flight through the atmosphere to be used later in the flight when at lower speeds and lower altitudes in icing conditions, for example. Depending on the time spent in icing and the severity of the icing conditions, certain embodiments could either be the sole means of ice protection or can act as partial or supplemental ice protection to reduce the burden on an active system or power requirements on an engine, for example. Embodiments can include a variety of methods to store the heat for use later, including using phase-change materials (e.g., a solid that turns into liquid when heated, then resists freezing to provide deicing), storing in an existing fluid used on the aircraft for other purposes (e.g., hydraulic, fuel, or water), or conversion of heat energy to other forms, e.g., electrical. While energy can be stored for later use, certain embodiments can be used to actively power electronics or other aircraft systems in high speed flight, e.g., in a primary electrical generator failure. Embodiments can reduce the overall size and/or weight of deicing systems, for example.

Embodiments can leverage the unique aspects of high speed vehicles (e.g., supersonic or hypersonic) to provide ice protection more efficiently than aircraft that fly at lower speeds. High-speed aircraft can accelerate and climb so quickly on takeoff that exposure to icing conditions may be limited enough to enable a passive means of dealing with any ice accretion (such as a wing design robust to such minimal accretion) during that flight phase. However, it is more likely that these vehicles will spend a significant amount of time in icing conditions during descent, approach, and landing. These phases of flight are often most critical for icing because the engines are at low power and it can be difficult to generate enough ice protection energy without increasing thrust to unacceptable levels, for example.

Using the heat energy that is unavoidably created by flying at high speeds as a source for ice protection either eliminates or reduces the need to burden the engines with creating that power for ice protection. In addition, depending on the implementation of the energy storage system it is possible to eliminate bleed air lines or electrical power distribution for an ice protection system.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

Any suitable combination(s) of any disclosed embodiments and/or any suitable portion(s) thereof are contemplated herein as appreciated by those having ordinary skill in the art.

The embodiments of the present disclosure, as described above and shown in the drawings, provide for improvement in the art to which they pertain.

## Claims

1. An aerodynamic friction energy system (100), comprising:
a heat energy device (101) configured to be operatively connected to an aircraft structure (103) and to convert heat energy due to aerodynamic friction on the aircraft structure into another form or to store heat energy due to friction on the aircraft structure, wherein the system (100) is configured for use in ice prevention and/or deicing;
**characterised in that**:
the heat energy device (101) includes a heat energy storage medium (105) configured to store the heat energy as heat for later use;
the heat energy storage medium (105) includes a phase change material configured to receive heat due to friction and to change phase from a solid to a liquid as a result to store heat for later use in ice prevention and/or deicing;
the heat energy storage medium (105) includes at least one fluid (205) circulating through the heat energy device (101) including at least one of aircraft fuel, aircraft hydraulic fluid, aircraft coolant, aircraft refrigerant, aircraft oil, or a dedicated energy storage fluid;
and **in that** the heat energy device (101) includes a thermoelectric generator (305) configured to convert heat due to friction into electrical energy, further comprising an electrical storage device (311) operatively connected to the thermoelectric generator to receive electrical energy therefrom, further comprising an electrical deicing system (313) attached to a structure (103) of an aircraft for receiving energy from the electrical storage device.

2. The system of claim 1, wherein the aircraft structure includes at least one of a leading edge of a wing, a leading edge of a tail, a fuselage, a control surface, an instrument probe, or a windscreen.

3. The system of claims 1 or 2, wherein the system (100) is an aerodynamic friction energy generation system for providing electrical energy to an aircraft, wherein the heat energy device is configured to be operatively connected to an aircraft structure and to convert heat energy due to aerodynamic friction on the aircraft structure into electrical energy for use by an aircraft system.

4. The system of claim 3, further comprising an electrical storage device (311) operatively connected to the heat energy device to receive electrical energy therefrom.

5. A method, comprising:
receiving heat energy caused by aerodynamic friction on an aircraft structure; and
storing the heat energy for later use; **characterized in that** the method further comprises storing the heat energy includes storing the heat energy as heat;
storing the heat energy as heat includes storing the heat energy in a phase change material;
further comprising using the stored heat energy for preventing ice formation or deicing the aircraft structure, or
further comprising using the stored heat for preventing ice formation or deicing the aircraft structure.

6. The method of claim 5, wherein storing the heat energy as heat includes storing the heat energy in an aircraft fluid, and wherein the aircraft fluid includes at least one of aircraft fuel, aircraft hydraulic fluid, aircraft coolant, aircraft refrigerant, or aircraft oil, or a dedicated energy storage fluid.

7. The method of claims 5 or 6, wherein storing the heat energy includes converting the heat energy into electrical energy and storing the electrical energy in an electrical storage device.

8. The method of claim 7, further comprising using the stored electrical energy for preventing ice formation or deicing the aircraft structure.

## Patentansprüche

1. Aerodynamisches Reibungsenergiesystem (100), umfassend:
eine Wärmeenergievorrichtung (101), die dazu konfiguriert ist, mit einer Flugzeugstruktur (103) wirkverbunden zu sein und durch aerodynamische Reibung an der Flugzeugstruktur entstehende Wärmeenergie in eine andere Form umzuwandeln oder durch Reibung an der Flugzeugstruktur entstehende Wärmeenergie zu speichern, wobei das System (100) zur Verwendung bei der Vereisungsverhütung und/oder Enteisung konfiguriert ist;
**dadurch gekennzeichnet, dass**:
die Wärmeenergievorrichtung (101) ein Wärmeenergiespeichermedium (105) beinhaltet, das dazu konfiguriert ist, die Wärmeenergie als Wärme zur späteren Verwendung zu speichern;
das Wärmeenergiespeichermedium (105) ein Phasenwechselmaterial beinhaltet, das dazu konfiguriert ist, durch Reibung entstehende Wärme zu empfangen und infolgedessen seine Phase von einem Feststoff in eine Flüssigkeit zu ändern, um Wärme zur späteren Verwendung bei der Vereisungsverhütung und/oder Enteisung zu speichern;
das Wärmeenergiespeichermedium (105) mindestens ein Fluid (205) beinhaltet, das durch die Wärmeenergievorrichtung (101) zirkuliert und mindestens eines von Flugzeugtreibstoff, Flugzeughydraulikfluid, Flugzeugkühlmittel, Flugzeugkältemittel, Flugzeugöl oder einem speziellen Energiespeicherfluid beinhaltet;
und dass die Wärmeenergievorrichtung (101) einen thermoelektrischen Generator (305) beinhaltet, der dazu konfiguriert ist, durch Reibung entstehende Wärme in elektrische Energie umzuwandeln, ferner umfassend eine elektrische Speichervorrichtung (311), die mit dem thermoelektrischen Generator wirkverbunden ist, um von diesem elektrische Energie zu empfangen, ferner umfassend ein elektrisches Enteisungssystem (313), das an einer Struktur (103) eines Flugzeugs angebracht ist, um Energie von der elektrischen Speichervorrichtung zu empfangen.

2. System nach Anspruch 1, wobei die Flugzeugstruktur mindestens eines von einer Vorderkante einer Tragfläche, einer Vorderkante eines Hecks, einem Rumpf, einer Steuerfläche, einer Instrumentensonde oder einer Windschutzscheibe beinhaltet.

3. System nach Anspruch 1 oder 2, wobei das System (100) ein System zur Erzeugung von aerodynamischer Reibungsenergie zum Bereitstellen von elektrischer Energie für ein Flugzeug ist, wobei die Wärmeenergievorrichtung dazu konfiguriert ist, mit einer Flugzeugstruktur wirkverbunden zu sein und durch aerodynamische Reibung an der Flugzeugstruktur entstehende Wärmeenergie in elektrische Energie zur Verwendung durch ein Flugzeugsystem umzuwandeln.

4. System nach Anspruch 3, ferner umfassend eine elektrische Speichervorrichtung (311), die mit der Wärmeenergievorrichtung wirkverbunden ist, um von dieser elektrische Energie zu empfangen.

5. Verfahren, umfassend:
Empfangen von Wärmeenergie, die durch aerodynamische Reibung an einer Flugzeugstruktur bewirkt wird; und
Speichern der Wärmeenergie zur späteren Verwendung;
**dadurch gekennzeichnet, dass** das Verfahren ferner Folgendes umfasst:
das Speichern der Wärmeenergie beinhaltet Speichern der Wärmeenergie als Wärme;
das Speichern der Wärmeenergie als Wärme beinhaltet Speichern der Wärmeenergie in einem Phasenwechselmaterial;
ferner umfassend Verwenden der gespeicherten Wärmeenergie zum Verhindern von Eisbildung oder Enteisen der Flugzeugstruktur, oder
ferner umfassend Verwenden der gespeicherten Wärme zum Verhindern von Eisbildung oder Enteisen der Flugzeugstruktur.

6. Verfahren nach Anspruch 5, wobei das Speichern der Wärmeenergie als Wärme Speichern der Wärmeenergie in einem Flugzeugfluid beinhaltet, und wobei das Flugzeugfluid mindestens eines von Flugzeugtreibstoff, Flugzeughydraulikflüssigkeit, Flugzeugkühlmittel, Flugzeugkältemittel oder Flugzeugöl oder einem speziellen Energiespeicherfluid beinhaltet.

7. Verfahren nach Anspruch 5 oder 6, wobei das Speichern der Wärmeenergie Umwandeln der Wärmeenergie in elektrische Energie und Speichern der elektrischen Energie in einer elektrischen Speichervorrichtung beinhaltet.

8. Verfahren nach Anspruch 7, ferner umfassend Verwenden der gespeicherten elektrischen Energie zum Verhindern von Eisbildung oder Enteisen der Flugzeugstruktur.

## Revendications

1. Système d'énergie de friction aérodynamique (100), comprenant :
un dispositif d'énergie thermique (101) configuré pour être connecté de manière opérationnelle à une structure d'aéronef (103) et pour convertir l'énergie thermique due au frottement aérodynamique sur la structure d'aéronef en une autre forme ou pour stocker l'énergie thermique due au frottement sur la structure d'aéronef, dans lequel le système (100) est configuré pour l'utilisation dans la prévention du givrage et/ou le dégivrage ;
**caractérisé en ce que** :
le dispositif d'énergie thermique (101) comporte un support de stockage d'énergie thermique (105) configuré pour stocker l'énergie thermique sous forme de chaleur pour une utilisation ultérieure ;
le support de stockage d'énergie thermique (105) comporte un matériau à changement de phase configuré pour recevoir de la chaleur due au frottement et pour changer de phase d'un solide à un liquide en conséquence pour stocker la chaleur pour une utilisation ultérieure dans la prévention du givrage et/ou le dégivrage ;
le moyen de stockage d'énergie thermique (105) comporte au moins un fluide (205) circulant à travers le dispositif d'énergie thermique (101) comportant au moins l'un d'un élément parmi le carburant d'avion, le fluide hydraulique d'avion, le liquide de refroidissement d'avion, le réfrigérant d'avion, l'huile d'avion ou un fluide de stockage d'énergie dédié ;
et **en ce que** le dispositif d'énergie thermique (101) comporte un générateur thermoélectrique (305) configuré pour convertir la chaleur due au frottement en énergie électrique, comprenant également un dispositif de stockage électrique (311) connecté de manière opérationnelle au générateur thermoélectrique pour recevoir de l'énergie électrique de celui-ci, comprenant également un système de dégivrage électrique (313) fixé à une structure (103) d'un aéronef pour recevoir de l'énergie du dispositif de stockage électrique.

2. Système selon la revendication 1, dans lequel la structure de l'aéronef comporte au moins l'un d'un bord d'attaque d'une aile, d'un bord d'attaque d'une queue, d'un fuselage, d'une surface de contrôle, d'une sonde d'instrument ou d'un pare-brise.

3. Système selon les revendications 1 ou 2, dans lequel le système (100) est un système de génération d'énergie de frottement aérodynamique pour la fourniture d'énergie électrique à un aéronef, dans lequel le dispositif d'énergie thermique est configuré pour être connecté de manière opérationnelle à une structure d'aéronef et pour convertir l'énergie thermique due au frottement aérodynamique sur la structure d'aéronef en énergie électrique destinée à être utilisée par un système d'aéronef.

4. Système selon la revendication 3, comprenant également un dispositif de stockage électrique (311) connecté de manière opérationnelle au dispositif d'énergie thermique pour recevoir de l'énergie électrique de celui-ci.

5. Procédé, comprenant :
recevoir de l'énergie thermique causée par le frottement aérodynamique sur la structure d'un aéronef ; et
stocker l'énergie thermique pour une utilisation ultérieure ;
**caractérisé en ce que** le procédé comprend également le stockage de l'énergie thermique comporte le stockage de l'énergie thermique sous forme de chaleur ;
le stockage de l'énergie thermique sous forme de chaleur comporte le stockage de l'énergie thermique dans un matériau à changement de phase ;
comporte également l'utilisation de l'énergie thermique stockée pour empêcher la formation de glace ou pour dégivrer la structure de l'aéronef, ou
comporte également l'utilisation de la chaleur stockée pour empêcher la formation de glace ou pour dégivrer la structure de l'aéronef.

6. Procédé selon la revendication 5, dans lequel le stockage de l'énergie thermique sous forme de chaleur comporte le stockage de l'énergie thermique dans un fluide d'aéronef, et dans lequel le fluide d'aéronef comporte au moins l'un d'un élément parmi le carburant d'aéronef, le fluide hydraulique d'aéronef, le liquide de refroidissement d'aéronef, le réfrigérant d'aéronef ou l'huile d'aéronef, ou un fluide de stockage d'énergie dédié.

7. Procédé selon les revendications 5 ou 6, dans lequel le stockage de l'énergie thermique comporte la conversion de l'énergie thermique en énergie électrique et le stockage de l'énergie électrique dans un dispositif de stockage électrique.

8. Procédé selon la revendication 7, comporte également l'utilisation de l'énergie électrique stockée pour empêcher la formation de glace ou pour dégivrer la structure de l'aéronef.
